# EUROPÄISCHE PATENTSCHRIFT

(11) **EP 2 323 876 B1**
(45) Veröffentlichungstag und Bekanntmachung des Hinweises auf die Patenterteilung: **06.07.2016**
(21) Anmeldenummer: 09780620.2
(22) Anmeldetag: 15.07.2009
(51) Int. Cl.: B60S 1/24, B60S 1/16, F16D 1/033, F16D 1/076, F16D 1/108

(54) **ABTRIEBSWELLE FÜR EINEN SCHEIBENWISCHERANTRIEB**
OUTPUT SHAFT FOR A WINDSCREEN WIPER DRIVE
ARBRE D ENTRAÎNEMENT POUR UN MÉCANISME D ENTRAÎNEMENT D UN ESSUIE-GLACE

(30) Priorität: 08.09.2008 DE 102008041864; 13.08.2008 DE 102008041233
(43) Veröffentlichungstag der Anmeldung: 25.05.2011
(73) Patentinhaber: Robert Bosch GmbH, 70442 Stuttgart (DE)
(72) Erfinder: MAIER, Gerald, 77833 Ottersweier-Unzhurst (DE); BECKER, Ewald, 77815 Buehl (DE); LAURENT, Stephane, F-67100 Strasbourg (FR); WEGNER, Norbert, 77815 Buehl (DE)
(86) Internationale Anmeldenummer: PCT/EP2009/059050
(87) Internationale Veröffentlichungsnummer: WO 2010/018042

(56) Entgegenhaltungen:
- WO-A-2008/151871
- DE-A1- 10 259 956
- DE-U1- 20 315 460
- GB-A- 2 088 707
- US-B1- 6 447 404

## Beschreibung

### Stand der Technik

Die Erfindung betrifft eine Abtriebswelle für einen Scheibenwischerantrieb, insbesondere für einen Frontscheibenwischerantrieb, gemäß dem Oberbegriff des Anspruchs 1, einen Scheibenwischerantrieb gemäß Anspruch 6 sowie eine Verwendung einer Abtriebswelle gemäß Anspruch 7.

Bekannte Frontscheibenwischerantriebe umfassen einen Elektromotor, der über ein Schneckengetriebe eine Abtriebswelle rotierend antreibt. An der Abtriebswelle des Scheibenwischerantriebs ist endseitig drehfest eine Kurbel (so genannte Motorkurbel) festgelegt, an der ein Gestänge angelenkt ist. Über das Gestänge werden zwei quer zur Fahrzeuglängsrichtung beabstandete Wischerwellen pendelnd angetrieben, wobei jede Wischerwelle drehfest mit einem einen Wischergummi tragenden Wischerarm verbunden ist. Bei bekannten Scheibenwischerantrieben ist die Motorkurbel mittels einer Befestigungsschraube an der Abtriebswelle festgelegt, wobei ein Außengewinde der Befestigungsschraube mit einem stirnseitig unmittelbar in die einteilige Abtriebswelle eingebrachten Innengewinde zusammenwirkt. Nachteilig bei dem bekannten Scheibenwischerantrieb ist die vergleichsweise aufwändige Fertigung der Abtriebswelle, insbesondere deshalb, weil das Gewinde durch spanende Bearbeitung bei der Herstellung der Abtriebswelle geschnitten wird.

Die Offenlegungsschrift GB 2 088 707 A zeigt ein Getriebegehäuse für eine Scheibenwischeranordnung umfassend eine Abtriebswelle mit einer Innenbohrung, in welche ein Achsenbolzen zwecks Befestigung einer Motorkurbel eingesteckt werden kann.

Die Offenlegungsschrift DE 102 059 956 A1 zeigt eine Scheibenwischvorrichtung mit mindestens einer Antriebseinrichtung, die mindestens eine Abtriebswelle aufweist, wobei die Abtriebswelle ein Innengewinde umfasst.

Die Patentschrift US 6,447,404 B1 zeigt einen zweiteiligen Golfschläger, welcher mittels eines Verbindungsteils umfassend zwei miteinander verschraubbare Teile verschraubt werden kann.

### Offenbarung der Erfindung

### Technische Aufgabe

Der Erfindung liegt daher die Aufgabe zugrunde, eine einfach fertigbare Abtriebswelle für einen Scheibenwischerantrieb zum Festlegen einer Motorkurbel bereitzustellen. Ferner besteht die Aufgabe darin, einen Scheibenwischerantrieb mit einer entsprechend optimierten Abtriebswelle bereitzustellen.

### Technische Lösung

Diese Aufgabe wird hinsichtlich der Abtriebswelle mit den Merkmalen des Anspruchs 1 und hinsichtlich des Scheibenwischerantriebs mit den Merkmalen des Anspruchs 8 gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen.

Der Grundgedanke der Erfindung besteht darin, dass das Innengewinde zum Zusammenwirken der Befestigungsschraube zum Festlegen der Motorkurbel an der Antriebswelle nicht mehr wie im Stand der Technik unmittelbar bei der Herstellung der Abtriebswelle in eine einteilige Abtriebswelle eingebracht wird, sondern stattdessen in einem, insbesondere als Massenartikel erhältlichen, Innengewindeteil vorgesehen ist, welches drehfest an einem langgestreckten Wellenteil der Abtriebswelle festgelegt ist. Anders ausgedrückt ist eine nach dem Konzept der Erfindung ausgebildete Abtriebswelle nicht einteilig, sondern zumindest, vorzugsweise genau, zweiteilig ausgebildet und umfasst ein ein Innengewinde aufweisendes Innengewindeteil, das drehfest mit einem, zumindest näherungsweise zylindrischen, Wellenteil verbunden ist. Durch diese Maßnahme vereinfacht sich die Herstellung der Abtriebswelle, da bei der Formgebung der Abtriebswelle, insbesondere durch Kaltumformen, auf eine separate spanende Bearbeitung zum Einbringen des Innengewindes verzichtet werden kann. Das beim Herstellen der Abtriebswelle zum Einsatz kommende Innengewindeteil kann separat hergestellt oder bezogen werden und bedarf bei der eigentlichen Fertigung bzw. Montage der Abtriebswelle keiner weiteren Bearbeitung. Insgesamt wird durch die Erfindung der eigentliche Herstellungsprozess der Abtriebswelle für einen Scheibenwischerantrieb verkürzt, wodurch die Herstellungskosten minimiert werden.

Nach einer nicht beanspruchte Ausführungsform kann vorgesehen sein, dass das Innengewindeteil als Gewindespirale ausgebildet ist als Alternative zu der beanspruchte Ausführungsform des Innengewindeteils als einseitig geschlossene Innengewindehülse.

In Weiterbildung der Erfindung ist mit Vorteil vorgesehen, dass das Innengewindeteil in das Wellenteil eingepresst und/oder eingeformt ist. Das Einpressen und/oder Einformen erfolgt dabei vorzugsweise während einer Kaltumformung eines stangenartigen Elementes zur Herstellung des langgestreckten Wellenteils. Die Formgebung des Wellenteils erfolgt also in einem gemeinsamen Schritt mit dem Festlegen des Innengewindeteils, so dass auf einen separaten Montageschritt verzichtet werden kann.

Mit Vorteil ist vorgesehen, dass bei der Herstellung des langgestreckten Wellenteils auf eine spanende Bearbeitung vollständig verzichtet wird. Dies kann dadurch realisiert werden, dass das langgestreckte Wellenteil ausschließlich durch Kaltumformen eines länglichen Metallteils (Rohling) hergestellt ist.

Nach der Erfindung ist das Innengewindeteil derart am langgestreckten Wellenteil angeordnet, dass von einer Stirnseite her in das Innengewinde des Innengewindeteils eine Befestigungsschraube zum Festlegen der Motorkurbel eingeführt und verschraubt werden kann. Hierzu ist das Innengewindeteil in einer stirnseitigen Öffnung (Aufnahme) des Wellenteils angeordnet, wobei die Öffnung nicht als in axialer Richtung durchgehende Öffnung, sondern als Sacklochöffnung ausgebildet ist, um die Robustheit der Abtriebswelle nicht unnötig zu schwächen.

Besonders zweckmäßig ist eine Ausführungsvariante der Abtriebswelle, bei der das Innengewindeteil und das langgestreckte Wellenteil aus unterschiedlichen Materialien, insbesondere aus unterschiedlichen Stählen, ausgebildet sind, wobei die Materialien entsprechend der Funktionen bzw. Beanspruchungsart. des Innengewindeteils bzw. des langgestreckten Wellenteils gewählt sind. So hat das Innengewindeteil im Wesentlichen die Aufgabe die Befestigungsschraube in axialer Richtung zu fixieren, um auf diese Weise die Motorkurbel axial gegen die Abtriebswelle zu pressen. Dem langgestreckten Wellenteil kommt im Wesentlichen die Aufgabe zu, zum einen ein Drehmoment von dem Getriebe aufzunehmen und an die Motorkurbel weiterzugeben.

Besonders bevorzugt ist eine Ausführungsform der Abtriebswelle, bei der diese, beispielsweise von einer Rändelung gebildete, Formschlussmittel zum formschlüssigen Verbinden mit einem Abtriebszahnrad eines Getriebes eines Scheibenwischerantriebs aufweist. Es ist auch eine Ausführungsform realisierbar, bei der die Abtriebswelle einteilig mit einem derartigen Abtriebsrad, welches vorzugsweise als Schneckenrad eines Schneckengetriebes ausgebildet ist, ausgeformt ist.

Die Erfindung führt auch auf einen Scheibenwischerantrieb, insbesondere einen Frontscheibenwischerantrieb, umfassend einen Elektromotor, ein von dem Elektromotor angetriebenes Getriebe sowie eine zuvor beschriebene Abtriebswelle, die mittels des Getriebes um ihre Längsachse in Rotation versetzbar ist. Ferner umfasst der Scheibenwischerantrieb eine drehfest an der Abtriebswelle mittels einer Befestigungsschraube festgelegte Motorkurbel, wobei die Befestigungsschraube mit dem Innengewinde des Innengewindeteils der Abtriebswelle verschraubt ist. Durch die zumindest, vorzugsweise ausschließlich, zweiteilige Ausbildung der Abtriebswelle, umfassend ein langgestrecktes Wellenteil und ein drehfest mit diesem verbundenes Innengewindeteil kann die Herstellung der Abtriebswelle vereinfacht werden, wodurch sich die Herstellung des Scheibenwischerantriebs insgesamt sowie dessen Herstellungskosten minimieren.

Darüber hinaus führt die Erfindung auch auf eine Verwendung einer mehrteiligen, zuvor beschriebenen Abtriebswelle als Abtriebswelle eines Scheibenwischerantriebs zum rotierenden Antreiben einer Kurbelwelle.

### Kurze Beschreibung der Zeichnungen

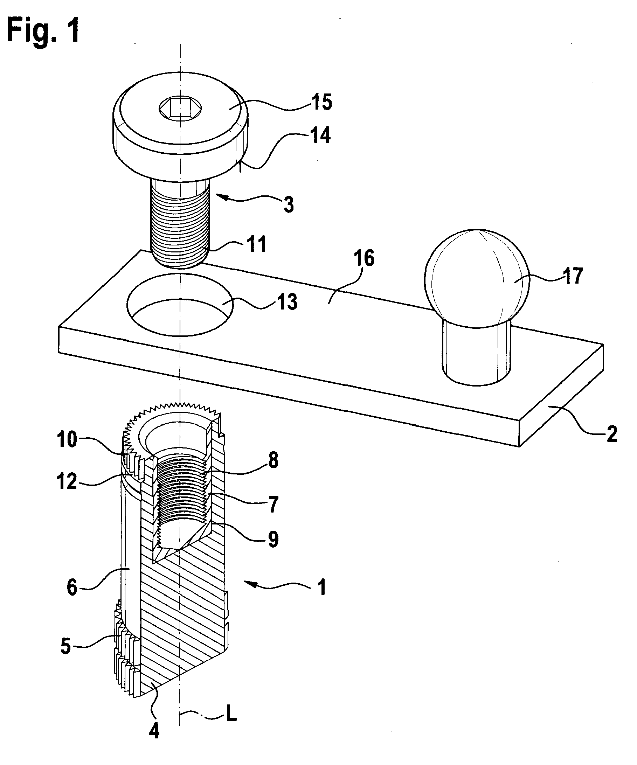

Weitere Vorteile, Merkmale und Einzelheiten der Erfindung ergeben sich aus der nachfolgenden Beschreibung eines bevorzugten Ausführungsbeispiels sowie anhand der Zeichnung. Diese zeigt in der einzigen Figur 1 eine Abtriebswelle eines Scheibenwischerantriebs sowie eine mittels einer Befestigungsschraube an der Abtriebswelle festlegbare Motorkurbel zum Antreiben eines Gestänges.

### Ausführungsform der Erfindung

In Fig. 1 sind eine Abtriebswelle 1, eine Motorkurbel 2 und eine Befestigungsschraube 3 eines ansonsten nicht weiter dargestellten und an sich bekannten, als Frontscheibenwischerantrieb ausgebildeten, Scheibenwischerantriebs gezeigt. Der Scheibenwischerantrieb umfasst neben den vorgenannten Bauelementen einen Elektromotor, der rotierend ein insbesondere als Schneckengetriebe ausgebildetes Getriebe antreibt. Von diesem nicht dargestellten Getriebe wiederum wird die gezeigte Abtriebswelle 1 rotierend um ihre Längsmittelachse L angetrieben. Zum formschlüssigen Verbinden der Abtriebswelle 1 mit einem nicht gezeigten, als Schneckenrad ausgebildeten Abtriebszahnrad des nicht gezeigten Getriebes umfasst die Abtriebswelle im Bereich ihres in der Zeichnungsebene unteren Endes 4 eine randseitige Rändelung 5 (Formschlussmittel).

Wie sich aus Fig. 1 ergibt, ist die Abtriebswelle 1 zweiteilig ausgebildet und umfasst ein langgestrecktes, im Wesentlichen zylinderförmiges Wellenteil 6 sowie ein drehfest mit dem Wellenteil 6 verbundenes Innengewindeteil 7 mit einem Innengewinde 8. Bei dem Innengewindeteil 7 handelt es sich um ein als Massenprodukt erhältliches, vorgefertigtes Bauteil, was zum Herstellen bzw. zur Montage der Abtriebswelle 1 eingesetzt wird. Hierdurch kann auf eine spanende Bearbeitung des Wellenteils 6, wie sie bei einer einteiligen Abtriebswelle 1 notwendig wäre, verzichtet werden. Das Innengewindeteil 7 ist formschlüssig in einer stirnseitigen, als Sacklochöffnung ausgebildeten Aufnahme 9 des Wellenteils 6 aufgenommen. Die drehfeste Befestigung des Innengewindeteils 7 an dem Wellenteil 6 erfolgte während des Kaltverformungsprozesses zur Herstellung der gezeigten Wellenteilform. Insbesondere wurden während des Kaltverformens die untere Rändelung 5 sowie eine in der Zeichnungsebene obere Rändelung 10 zum formschlüssigen Verbinden der Abtriebswelle 1 mit der Motorkurbel 2 eingeformt.

Wie sich aus Fig. 1 ergibt, handelt es sich bei dem Innengewindeteil 7 um eine endseitig geschlossene Gewindehülse. Alternativ ist es denkbar, eine einfache Gewindespirale in die Aufnahme 9 der Abtriebswelle 1 durch Form- und/oder Reibschluss zu integrieren.

Das Innengewinde 8 des Innengewindeteils 7 ist zum Zusammenwirken mit einem Außengewinde 11 der Befestigungsschraube 3 ausgebildet, die zum axialen Pressen der Motorkurbel 2 gegen eine am Außenumfang der Abtriebswelle 1 vorgesehene Umfangsschulter 12 dient.

Zum drehfesten Verbinden der Motorkurbel 2 und der Abtriebswelle 1 wird die Motorkurbel 2 mit einer Durchgangsöffnung 13 über das axiale Ende der Abtriebswelle 1 mit seiner oberen Rändelung 10 gestülpt, woraufhin die Befestigungsschraube 3 in das Innengewinde 8 des Innengewindeteils 7 eingeschraubt wird. Dabei durchsetzt die Befestigungsschraube 3 die Durchgangsöffnung 13 in axialer Richtung. Bei fertig montierter Motorkurbel 2 stützt sich die Befestigungsschraube 3 mit einer ringförmigen Unterkopffläche 14 eines Schraubenkopfes 15 der Befestigungsschraube 3 an einer von der Abtriebswelle 1 abgewandten Flachseite 16 im Bereich radial außerhalb der Durchgangsöffnung 13 ab und beaufschlagt die Motorkurbel 2 dadurch mit einer axialen Anpresskraft. Die obere Rändelung 10 gräbt sich bei der Montage in den Innenumfang der Durchgangsöffnung 13 ein, wodurch zusätzlich zu der Pressverbindung eine formschlüssige Verbindung erzielt wird.

Wie sich weiter aus Fig. 1 ergibt, ist die Motorkurbel 2 als Flachscheibe ausgebildet und trägt mit Abstand zu der Durchgangsöffnung 13 also mit Abstand zu der Längsmittelachse L der Abtriebswelle 1 einen kugelförmigen Gelenkzapfen 17 zum Festlegen des von der Motorkurbel 2 anzutreibenden, nicht gezeigten Gestänges des Scheibenwischerantriebs.

## Patentansprüche

1. Abtriebswelle für einen Scheibenwischerantrieb, mit einem Innengewinde (8) zur Aufnahme (9) einer Befestigungsschraube (3) zum Festlegen einer Motorkurbel (2),
wobei,
das Innengewinde (8) in einem Innengewindeteil (7) vorgesehen ist, das drehfest an einem langgestreckten Wellenteil (6) festgelegt ist, wobei das Wellenteil (6) einen, vorzugsweise zylindrischen oder konischen, Rändelabschnitt zum formschlüssigen Festlegen der Motorkurbel (2) aufweist, wobei das Innengewindeteil (7) als einseitig geschlossene innengewindehülse ausgebildet ist, **dadurch gekennzeichnet, daß** die Innengewindehülse in einer stirnseitigen, als Sacklochöffnung ausgebildeten, Öffnung des Wellenteils (6) angeordnet ist.

2. Abtriebswelle nach Anspruch 1,
**dadurch gekennzeichnet,**
**dass** das Innengewindeteil (7) in das langgestreckte Wellenteil (6), eingepresst und/oder eingeformt ist.

3. Abtriebswelle nach einem der Ansprüche 1 oder 2,
**dadurch gekennzeichnet,**
**dass** das langgestreckte Wellenteil (6) ausschließlich durch Kaltumformen aus einem stangenförmigen Metallteil gebildet ist.

4. Abtriebswelle nach einem der vorhergehenden Ansprüchen,
**dadurch gekennzeichnet,**
**dass** das Innengewindeteil (7) und das langgestreckte Welienteil (6) aus unterschiedlichen Materialien, insbesondere unterschiedlichen Stählen, ausgebildet sind.

5. Abtriebswelle nach einem der vorhergehenden Ansprüchen,
**dadurch gekennzeichnet,**
**dass** die Abtriebswelle (1) Formschlussmittel zum formschlüssigen Verbinden mit einem Abtriebsrad eines Getriebes aufweist.

6. Scheibenwischerantrieb, insbesondere Frontscheibenwischerantrieb, mit einem ein Elektromotor, einem Getriebe mit einer Abtriebswelle (1) nach einem der vorhergehenden Ansprüche, sowie mit einer Motorkurbel (2), die mittels einer mit dem Innengewinde (8) der Abtriebswelle (1) verschraubten Befestigungsschraube (3) an der Abtriebswelle (1) festgelegt ist.

7. Verwendung einer Abtriebswelle (1) nach einem der Ansprüche 1 bis 5 als Abtriebswelle (1) eines Scheibenwischerantriebs zum rotierenden Antreiben einer Motorkurbel (2).

## Claims

1. Output shaft for a windscreen wiper drive, with an internal thread (8) for receiving (9) a fastening screw (3) for securing a motor crank (2),
wherein
the internal thread (8) is provided in an internally threaded part (7) which is secured on an elongate shaft part (6) for rotation therewith, wherein the shaft part (6) has a, preferably cylindrical or conical, knurled portion for the form-fitting securing of the motor crank (2), wherein the internally threaded part (7) is designed as an internally threaded sleeve which is closed on one side, **characterized in that** the internally threaded sleeve is arranged in an opening in the form of a blind hole opening on the end side of the shaft part (6).

2. Output shaft according to Claim 1, **characterized in that** the internally threaded part (7) is pressed and/or moulded into the elongate shaft part (6).

3. Output shaft according to either of Claims 1 and 2, **characterized in that** the elongate shaft part (6) is formed exclusively by cold forming from a rod-shaped metal part.

4. Output shaft according to one of the preceding claims, **characterized in that** the internally threaded part (7) and the elongate shaft part (6) are formed from different materials, in particular different steels.

5. Output shaft according to one of the preceding claims, **characterized in that** the output shaft (1) has form-fitting means for the form-fitting connection to an output gear of a gearing.

6. Windscreen wiper drive, in particular front windscreen wiper drive, with a an electric motor, a gearing with an output shaft (1) according to one of the preceding claims, and with a motor crank (2) which is secured on the output shaft (1) by means of a fastening screw (3) screwed to the internal thread (8) of the output shaft (1).

7. Use of an output shaft (1) according to one of Claims 1 to 5 as an output shaft (1) of a windscreen wiper drive for rotatingly driving a motor crank (2).

## Revendications

1. Arbre de prise de force pour un entraînement d'essuie-glace, comprenant un filetage interne (8) destiné à recevoir (9) une vis de fixation (3) pour la fixation d'une manivelle motorisée (2),
le filetage interne (8) étant prévu dans une partie de filetage interne (7) qui est fixée de manière solidaire en rotation à une partie d'arbre allongée (6), la partie d'arbre (6) présentant une portion moletée de préférence cylindrique ou conique pour la fixation par engagement par correspondance de formes de la bielle motorisée (2), la partie de filetage interne (7) étant réalisée sous la forme d'une douille de filetage interne fermée d'un côté, **caractérisé en ce que** la douille de filetage interne est disposée dans une ouverture de la partie d'arbre (6) du côté frontal, réalisée sous forme d'ouverture de trou borgne.

2. Arbre de prise de force selon la revendication 1, **caractérisé en ce que** la partie de filetage interne (7) est pressée et/ou formée dans la partie d'arbre allongé (6).

3. Arbre de prise de force selon l'une quelconque des revendications 1 ou 2, **caractérisé en ce que** la partie d'arbre allongée (6) est formée exclusivement par formage à froid à partir d'une partie métallique en forme de barre.

4. Arbre de prise de force selon l'une quelconque des revendications précédentes, **caractérisé en ce que** la partie de filetage interne (7) et la partie d'arbre allongée (6) sont réalisées à partir de matériaux différents, en particulier d'aciers différents.

5. Arbre de prise de force selon l'une quelconque des revendications précédentes, **caractérisé en ce que** l'arbre de prise de force (1) présente des moyens d'engagement par correspondance de formes pour la connexion par engagement par correspondance de formes à une roue de prise de force d'une transmission.

6. Entraînement d'essuie-glace, en particulier entraînement d'essuie-glace de pare-brise, comprenant un un moteur électrique, une transmission avec un arbre de prise de force (1) selon l'une quelconque des revendications précédentes, ainsi qu'une bielle motorisée (2) qui est fixée à l'arbre de prise de force (1) au moyen d'une vis de fixation (3) vissée au filetage interne (8) de l'arbre de prise de force (1).

7. Utilisation d'un arbre de prise de force (1) selon l'une quelconque des revendications 1 à 5 en tant qu'arbre de prise de force (1) d'un entraînement d'essuie-glace pour l'entraînement en rotation d'une bielle motorisée (2).
